# EUROPÄISCHE PATENTSCHRIFT

(11) **EP 2 912 736 B1**
(45) Veröffentlichungstag und Bekanntmachung des Hinweises auf die Patenterteilung: **14.06.2017**
(21) Anmeldenummer: 13776729.9
(22) Anmeldetag: 14.10.2013
(51) Int. Cl.: H02G 1/12

(54) **VORRICHTUNG UND VERFAHREN ZUM BEARBEITEN EINES ENDES EINES KABELS**
DEVICE AND METHOD FOR THE PREPARATION OF A CABLE END
DISPOSITIF ET PROCEDURE DE PREPARATION DE LA PARTIE TERMINALE D'UN CABLE

(30) Priorität: 23.10.2012 DE 102012020798
(43) Veröffentlichungstag der Anmeldung: 02.09.2015
(73) Patentinhaber: Rosenberger Hochfrequenztechnik GmbH & Co. KG, 83413 Fridolfing (DE)
(72) Erfinder: BALDAUF, Walter, 83413 Fridolfing (DE)
(74) Vertreter: Zeitler Volpert Kandlbinder Patent- und Rechtsanwälte Partnerschaft mbB
(86) Internationale Anmeldenummer: PCT/EP2013/003087
(87) Internationale Veröffentlichungsnummer: WO 2014/063794

(56) Entgegenhaltungen:
- JP-A- 2001 309 522
- JP-A- 2012 050 169
- JP-B1- S5 139 358
- US-A1- 2007 173 122
- US-B1- 6 536 103

## Beschreibung

Die Erfindung betrifft eine Vorrichtung und ein Verfahren zum Bearbeiten eines Endes eines Kabels mit einem Innenteil und einer den Innenteil umgebenden Hülle, insbesondere eines Koaxialkabels.

Im Rahmen der Kabelkonfektionierung werden die Enden von Kabeln bearbeitet, um diese für die Verbindung mit z.B. einem Steckverbinder vorzubereiten. Bei Koaxialkabeln kann dies ein Freilegen des Innenleiters in einem Abschnitt des zu bearbeitenden Endes sowie ein Freilegen des den Innenleiter koaxial umgebenden Außenleiters in einem zweiten Abschnitt erfordern. Hierzu wird regelmäßig zunächst ein den Außenleiter umgebender Mantel über die gesamte Länge des zu bearbeitenden Endes des Kabels entfernt, um den Außenleiter freizulegen. Daraufhin wird der regelmäßig aus einem Drahtgeflecht bestehende Außenleiter unter einer zunächst radialen Aufweitung nach hinten umgestülpt, so dass dieser auf dem Mantel des sich an das zu bearbeitende Ende des Kabels anschließenden Abschnitts aufliegt. Danach wird die Isolationsschicht, die den Innenleiter elektrisch von dem Außenleiter isoliert, in einem Abschnitt oder über der gesamten Lange des zu bearbeitenden Endes des Kabels entfernt und dadurch der Innenleiter freigelegt.

Daraufhin kann ein Verbinden mit z.B. einem Koaxialsteckverbinder erfolgen, wobei ein Innenleiterteil des Koaxialsteckverbinders elektrisch und mechanisch mit dem freigelegten Innenleiterabschnitt des Kabels verbunden, z.B. vercrimpt wird. Gleichzeitig kann ein Außenleiterteil des Koaxialsteckverbinders mit dem Außenleiter elektrisch verbunden werden, z.B. indem das Außenleiterteil auf den umgestülpten Abschnitt des Außenleiters aufgeschoben und radial gegen den darunter liegenden Abschnitt des Mantels verpresst, z.B. vercrimpt wird.

In vielen Fällen soll die Länge des umgestülpten Abschnitts des Außenleiters kürzer als das zu bearbeitende Ende des Kabels sein, so dass dieser in einem weiteren Arbeitsschritt durch Abschneiden gekürzt wird.

Zur Kostensenkung wird eine möglichst vollautomatische Konfektionierung von Kabeln angestrebt, so dass auch die beschriebene Bearbeitung der Enden der Kabel automatisiert werden soll.

Eine hierzu geeignete Vorrichtung sowie ein entsprechendes Verfahren sind aus der US 4 719 697 bekannt. Dort wird das Ende eines Koaxialkabels automatisiert für die Verbindung mit einem Koaxialsteckverbinder vorbereitet und gleichzeitig auch mit diesem verbunden. Mittels einer Schneidvorrichtung wird hierzu zunächst der Mantel, der Außenleiter sowie die Isolationsschicht des Kabels in einem Abschnitt des zu bearbeitenden Endes entfernt und dadurch der Innenleiter freigelegt. Mittels derselben Schneidvorrichtung wird dann in einem weiteren Abschnitt des zu bearbeitenden Endes der Mantel entfernt, um in diesem Abschnitt das Außenleitergeflecht freizulegen. Dann erfolgt ein erstes radiales Aufweiten des freigelegten Außenleitergeflechts, indem ein Rad in der Nähe des kabelseitigen Endes des freigelegten Außenleitergeflechts in dieses radial hineingedrückt und in dieser Position um das fixierte Kabel gerollt wird. Dadurch wird das Außenleitergeflecht lokal in die Isolationsschicht gedrückt, was mit einem Aufweiten der freien Enden des freigelegten Außenleitergeflechts verbunden ist. Diese Aufweitung wird dann durch weitere Maßnahmen, u.a. das axiale Hineinfahren eines Aufweitdorns vergrößert. In den so entstehenden Spalt zwischen Außenleitergeflecht und Isolationsschicht wird dann ein Außenleiterteil des Steckverbinders geschoben und das aufgeweitete Außenleitergeflecht dann mittels einer Hülse gegen die Außenseite des Außenleiterteils gepresst. Dadurch erfolgt eine elektrische und mechanische Verbindung zwischen dem Außenleiter des Kabels und dem Außenleiterteil des Koaxialsteckverbinders. Ein Umstülpen oder ein Kürzen des aufgeweiteten Außenleitergeflechts ist bei dem Verfahren gemäß der US 4 719 697 nicht vorgesehen.

Eine gattungsgemäße Vorrichtung ist aus der JP 2012 050169 A bekannt. Diese beschreibt eine Vorrichtung zur Bearbeitung eines Endes eines Kabels mit einem Innenteil und einer den Innenteil umgebenden Hülle. Es ist Druckluft zum radialen Aufweiten eines Abschnitts der Hülle vorgesehen. Eine Schneideinrichtung weist einen ersten Schneidkörper und einen zweiten Schneidkörper auf, wobei der zweite Schneidkörper in axialer Richtung bezüglich des Kabelendes verfahrbar ist und dadurch den radial aufgeweiteten Abschnitt der Hülle in einem Bereich durchtrennt. Der erste Schneidkörper taucht in eine radiale Öffnung des zweiten Schneidkörpers ein, wobei die Hülle durchtrennt wird. Die Vorrichtung weist ein Stülprohr auf, welches in den Spalt zwischen dem radial aufgeweiteten Abschnitt der Hülle und dem Innenteil axial hineinfahrbar ist, um den Abschnitt der Hülle umzubiegen. Das Stülprohr ist mit dem zweiten Schneidkörper fest verbunden und wird in den Spalt eingefahren, bis das Stülprohr anschlägt.

Aus der JP 2001 309522 A ist eine Vorrichtung mit einer inneren rohrförmigen Schneide zum Bearbeiten eines freien Endes eines geschirmten Kabels mit Schirmgeflecht bekannt. Ein Radius der inneren rohrförmigen Schneide ist mindestens um die Dicke des Schirmgeflechtes größer ist als ein halber Außendurchmesser des Kabels. Die innere rohrförmige Schneide weist eine Schneidkante um eine äußere Umfangskante herum auf. Weiterhin ist eine äußere rohrförmige Schneide vorgesehen, welche koaxial zur inneren rohrförmigen Schneide angeordnet ist und deren Innendurchmesser etwas größer ist als der Außendurchmesser der inneren rohrförmigen Schneide. Die äußere rohrförmige Schneide weist eine Schneidkante um eine innere Umfangskante auf, welche der inneren Schneide zugewandt ist. Die innere Schneide wird auf die äußere Schneide zubewegt, um das Schirmgeflecht zu schneiden. Mit einer weiteren Bewegung der inneren Schneide wird der gesamte Rest des freigelegten Schirmgeflechtes gegen einen Außenmantel des geschirmten Kabels gepresst. Anschließend wird die innere Schneide zurückgezogen.

Aus der US 2007/0173122 A1 sind eine Vorrichtung und ein Verfahren zum Bearbeiten eines Endabschnitteses eines geschirmten Kabels mit einem Innenleiter, einem Schirmgeflecht und einem Mantel bekannt. Hierbei wird in einem ersten Schritt das Schirmgeflecht des Kabels freigelegt und aufgeweitet. In einem zweiten Schritt wird eine erste Röhre zwischen das Schirmgeflecht und einer Innenleiterisolierung geschoben sowie nachfolgend mit einer zweiten Röhre das aufgeweitete Schirmgeflecht gegen den Mantel des Kabels umgeschlagen. Die zweite Röhre ist am Außenumfang der ersten Röhre sowie konzentrisch zu dieser angeordnet.

Ausgehend von diesem Stand der Technik lag der Erfindung die Aufgabe zugrunde, ein gattungsgemäßes Verfahren zum automatisierten Bearbeiten von Kabelenden weiter zu verbessern und insbesondere um die Möglichkeit einer automatisierten Kürzung des radial aufgeweiteten Abschnitts des Außenleiters zu ergänzen.

Diese Aufgabe wird durch eine Vorrichtung und ein Verfahren gemäß den unabhängigen Patentansprüchen gelöst. Vorteilhafte Ausgestaltungen der erfindungsgemäßen Vorrichtung und des erfindungsgemäßen Verfahrens sind Gegenstand der abhängigen Patentansprüche und ergeben sich aus der nachfolgenden Beschreibung der Erfindung.

Eine erfindungsgemäße Vorrichtung zur Bearbeitung eines Endes eines Kabels mit einem Innenteil und einer den Innenteil umgebenden Hülle, umfasst zumindest Mittel zum radialen Aufweiten eines Abschnitts der Hülle (oder eines Teils davon) und eine Schneidvorrichtung mit (zumindest) einem ersten und einem zweiten Schneidkörper, die in axialer Richtung bezüglich des Kabelendes zueinander verfahrbar sind und dadurch den radial aufgeweiteten Abschnitt der Hülle in einem Bereich durchtrennen, wobei die Vorrichtung ein Stülprohr aufweist, das in den Spalt zwischen dem radial aufgeweiteten Abschnitt der Hülle und dem Innenteil axial hineinfahrbar ist, um den Abschnitt der Hülle umzubiegen. Das Stülprohr ist federbelastet mit dem ersten Schneidkörper verbunden und wird durch eine axiale Bewegung des ersten Schneidkörpers in den Spalt hineingefahren, bis das Stülprohr axial anschlägt, und eine weitergehende Bewegung des ersten Schneidkörpers in einer Relativbewegung zu dem Stülprohr erfolgt, wobei der erste Schneidkörper rohrförmig ausgebildet ist und nach dem Durchtrennen den verbliebenen radial aufgeweiteten Abschnitt der Hülle durch ein Überfahren des sich an das zu bearbeitende Ende anschließenden Abschnitts des Kabels umstülpt.

Ein entsprechendes (automatisiertes) Verfahren zum Bearbeiten eines Endes eines Kabels mit einem Innenteil und einer den Innenteil umgebenden Hülle sieht vor, dass ein Abschnitt der Hülle (oder eines Teils davon) radial aufgeweitet wird und der radial aufgeweitete Abschnitt der Hülle durch das Ausüben einer axialen (bezogen auf die Längsachse des Kabels in dem zu bearbeitenden Ende) Schneidkraft in einem Bereich durchtrennt wird.

Unter "radial Aufweiten" wird erfindungsgemäß ein (elastisches oder plastisches) Umbiegen des Abschnitts der Hülle derart, dass sich dieser Abschnitt zumindest teilweise in radialer Richtung (nicht zwingend senkrecht) zu der Längsachse des Kabelendes erstreckt, verstanden

Ein wesentlicher Vorteil der erfindungsgemäßen Vorrichtung und des erfindungsgemäßen Verfahrens ist, dass das Durchtrennen der Hülle gleichzeitig mit dem radialen Aufweiten bzw. einem weitergehenden Umbiegen erfolgen kann. Dadurch kann erreicht werden, dass sich der Zeitraum, der für die Bearbeitung eines Kabelendes erforderlich ist, trotz des zusätzlichen Kürzens der Hülle nicht oder nicht wesentlich verlängert.

Bei dem zu bearbeitenden Kabel handelt es sich vorzugsweise um ein Koaxialkabel, das zumindest (mindestens) einen Innenleiter und (mindestens) einen den Innenleiter umgebenden Außenleiter sowie (mindestens) eine den Innenleiter von dem Außenleiter elektrisch isolierende Isolationsschicht umfasst. Vorzugsweise ist zudem noch (mindestens) ein den Außenleiter umgebender Mantel vorgesehen. Der Innenteil des Koaxialkabels kann dann den Innenleiter und die Isolationsschicht und die Hülle den Außenleiter und den Mantel umfassen, wobei vorzugsweise nur der Außenleiter radial aufgeweitet und ggf. umgebogen (insbesondere umgestülpt) wird, während der Mantel in dem entsprechenden Abschnitt vorab entfernt wurde.

Dementsprechend ist in einer bevorzugten Ausführungsform des erfindungsgemäßen Verfahrens vorgesehen, dass eine äußere Schicht der Hülle (insbesondere ein Mantel eines Koaxialkabels) vor dem radialen Aufweiten einer inneren Schicht der Hülle (insbesondere eines Außenleiters des Koaxialkabels) in dem radial aufzuweitenden Abschnitt der Hülle entfernt wird. Die erfindungsgemäße Vorrichtung kann hierzu eine entsprechende Trennvorrichtung aufweisen.

Der Außenleiter des Koaxialkabels ist vorzugsweise in Form eines Geflechts ausgebildet, da sich ein solches Außenleitergeflecht relativ leicht radial aufweiten und ggf. umbiegen und umstülpen lässt. Die erfindungsgemäße Bearbeitung eines Koaxialkabels mit einem massiven Außenleiter oder einer sonstigen ggf. massiven Hülle ist jedoch ebenfalls unter elastischer und/oder plastischer Deformation und ggf. einem Reißen des Außenleiters bzw. der Hülle in dem radial aufzuweitenden Abschnitt möglich.

Vorzugsweise kann vorgesehen sein, dass das radiale Aufweiten des Abschnitts der Hülle durch das Ausüben radialer (nach innen gerichteter) Kräfte in einem Teilbereich des Abschnitts erfolgt. Hierzu umfasst die erfindungsgemäße Vorrichtung vorzugsweise einen Zwicker, der den umzubiegenden Abschnitt der Hülle somit in diesem Teilbereich in den Innenteil des Kabels drückt.

In einer bevorzugten Ausführungsform der erfindungsgemäßen Vorrichtung ist vorgesehen, dass der erste Schneidkörper in eine Öffnung des zweiten Schneidkörpers eintaucht, wobei die Hülle durchtrennt wird. Dies stellt eine konstruktiv besonders einfache Ausgestaltung einer axial wirkenden Schneidvorrichtung dar.

Weiterhin ist dann optional vorgesehen, dass der erste Schneidkörper hülsenförmig ausgebildet ist und nach dem Durchtrennen den verbliebenen radial aufgeweiteten Abschnitt der Hülle durch ein Überfahren des sich an das zu bearbeitende Ende anschließenden Abschnitts des Kabels weiter umbiegt und insbesondere umstülpt.

Erfindungsgemäß ist vorgesehen, dass der radial aufgeweitete Abschnitt der Hülle durch Ausüben von axialen Kräften umgebogen d.h. weiter radial aufgeweitet oder umgestülpt (über die senkrechte (bezogen auf die ursprüngliche Ausrichtung) Ausrichtung hinaus umgebogen) wird. Dies erfolgt vor oder nach dem Durchtrennen des radial aufgeweiteten Abschnitts. Die erfindungsgemäße Vorrichtung weist dazu ein Stülprohr auf, das in den zwischen dem radial aufgeweiteten Abschnitt der Hülle und dem Innenteil ausgebildeten Spalt axial hineinfahrbar ist, um den radial aufgeweiteten Abschnitt der Hülle umzubiegen.

Erfindungsgemäß ist das Stülprohr federbelastet mit dem ersten Schneidkörper verbunden, wobei das Stülprohr durch eine axiale Bewegung des ersten Schneidkörpers in den Spalt hineingefahren wird, bis das Stülprohr axial anschlägt und eine weitergehende Bewegung des ersten Schneidkörpers (unter Vorspannung der Feder) in einer Relativbewegung zu dem Stülprohr erfolgt. Dies ermöglicht, den umzubiegenden Teil der Hülle mittels des Stülprohrs in eine für das Durchtrennen vorteilhafte Position (z.B. mit einer senkrechten Ausrichtung zur Längsachse des zu bearbeitenden Kabelendes) zu bringen. Ein weiteres Umbiegen (insbesondere Umstülpen) des verbliebenden radial aufgeweiteten Abschnitts der Hülle nach dem Durchtrennen erfolgt dann mittels des ersten Schneidkörpers.

Als axialer Anschlag für das Stülprohr dient beispielsweise eine den radial aufzuweitenden Abschnitt begrenzende, das Kabel in dem sich an das zu bearbeitende Ende anschließenden Abschnitt umgebende Stützhülse. Alternativ dient beispielsweise aber auch das stirnseitige Ende einer zuvor gekürzten äußeren Schicht (insbesondere ein Mantel eines Koaxialkabels) der Hülle als axialer Anschlag. Die Stützhülse übernimmt optional auch andere Funktionen und dient insbesondere zur Positionssicherung des zu bearbeitenden Endes des Kabels.

Um eine möglichst weitgehende Automatisierung der Bearbeitung des Kabelendes zu erreichen, umfasst die erfindungsgemäße Vorrichtung noch (mindestens) einen Positionssensor, der eine definierte Position des zu bearbeitenden Endes des Kabels in der Vorrichtung detektiert. Eine Steuerungsvorrichtung initiiert dann die Bearbeitung des Endes des Kabels.

Das erfindungsgemäße Verfahren sieht schließlich optional noch vor, dass eine äußere Schicht des Innenteils (insbesondere eine Isolationsschicht eines Koaxialkabels) nach dem radialen Aufweiten des Abschnitts der Hülle und dem dadurch erfolgenden Freilegen eines entsprechenden Abschnitts des Innenteils entfernt wird, um eine innere Schicht des Innenteils (hierbei kann es sich auch um einen Kern, wie insbesondere eine Innenleiter eines Koaxialkabels handeln) freizulegen. Die erfindungsgemäße Vorrichtung weist dazu optional eine entsprechende Trennvorrichtung auf, bei der es sich insbesondere auch um dieselbe Trennvorrichtung handelt, die auch zum Entfernen einer äußeren Schicht der Hülle verwendet wird.

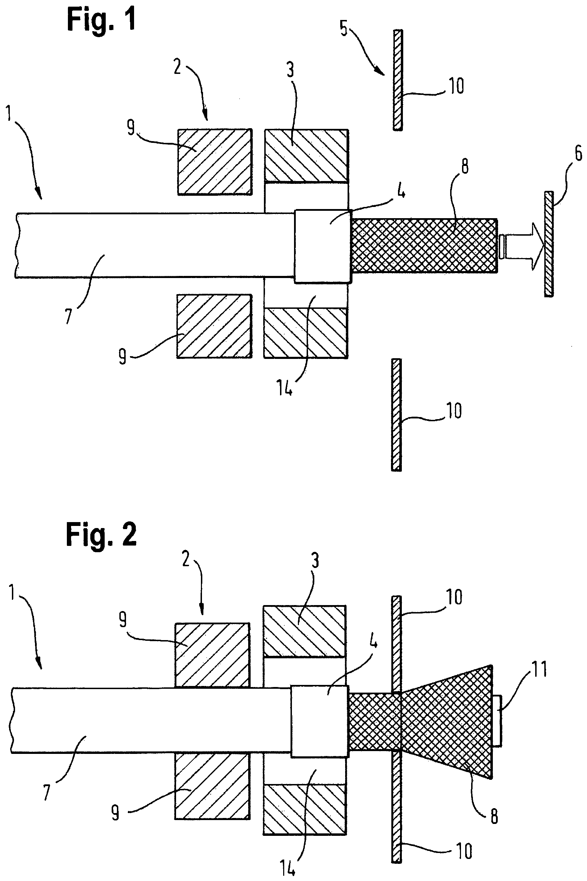

Die Erfindung wird nachfolgend anhand eines in den Zeichnungen dargestellten Ausführungsbeispiels näher erläutert. In den Zeichnungen zeigen die
- Fig. 1 bis 8:: verschiedene Schritte eines erfindungsgemäßen Verfahrens sowie Bestandteile der dabei zum Einsatz kommenden erfindungsgemäßen Vorrichtung in schematischen Darstellungen.

Die Fig. 1 zeigt, wie ein Koaxialkabel 1, dessen Ende bearbeitet werden soll, in axialer Richtung in eine erfindungsgemäße Vorrichtung eingeschoben wird. Dabei wird das Koaxialkabel 1 durch entsprechende Öffnungen bzw. Zwischenräume einer Klemmvorrichtung 2, eines (zweiten) Schneidwerkzeugs 3, einer Stützhülse 4 und eines Zwickers 5 hindurchgeführt. Mittels eines Positionssensors 6 wird das Erreichen einer vordefinierten Position des Kabelendes in der Vorrichtung detektiert und daraufhin, von einer Steuerungsvorrichtung (nicht dargestellt) gesteuert, das Koaxialkabel 1 vollautomatisch mittels der Vorrichtung bearbeitet.

Das hier dargestellte Koaxialkabel 1 wurde für die Bearbeitung vorbereitet, indem dessen Mantel 7 in dem zu bearbeitenden Abschnitt entfernt und dadurch ein Außenleitergeflecht 8 des Koaxialkabels 1 in diesem Abschnitt freigelegt wurde. Dieses Freilegen des Außenleitergeflechts 8 kann durch eine geringfügige Abwandlung des hier beschriebenen Verfahrens auch durch die hier dargestellte Vorrichtung automatisiert erfolgen, wie dies im Weiteren noch erläutert wird.

Die Fig. 2 zeigt zum einen eine Fixierung des Koaxialkabels 1 mittels der Klemmvorrichtung 2, deren Klemmbacken 9 hierzu radial (bezüglich der Längsachse des Kabels) zusammengefahren werden. Das Koaxialkabel 1 bzw. zumindest dessen zu bearbeitendes Ende ist dadurch primär axial aber auch gegen ein Verdrehen gesichert.

Die Fig. 2 zeigt zudem das radiale Aufweiten des freigelegten Außenleitergeflechts 8. Hierzu werden zwei Zwickerelemente 10 des Zwickers 5 radial (bezüglich der Längsachse des Kabels) zusammengefahren, wodurch das Außenleitergeflecht 8 in einem Teilbereich des freigelegten Abschnitts, der in einem Abstand von dem freien Ende des Koaxialkabels 1 bzw. des Außenleitergeflechts 8 und vorzugsweise möglichst nah an der Stützhülse 4 positioniert ist, ein Stück weit in die unter dem Außenleitergeflecht liegende Isolationsschicht des Koaxialkabels gedrückt wird. Dies führt zu einer lokalen (im Wesentlichen plastischen) Deformation der einzelnen Drähte des Außenleitergeflechts 8 und im Ergebnis zu einem radialen Aufweiten des Außenleitergeflechts 8 in dem Abschnitt zwischen den Zwickerelementen 10 und dem freien Ende des Außenleitergeflechts 8. Dadurch bildet sich ein trichterförmig aufgeweiteter Spalt zwischen dem Außenleitergeflecht 8 und einer Isolationsschicht 11 des Koaxialkabels 1 in diesem Abschnitt.

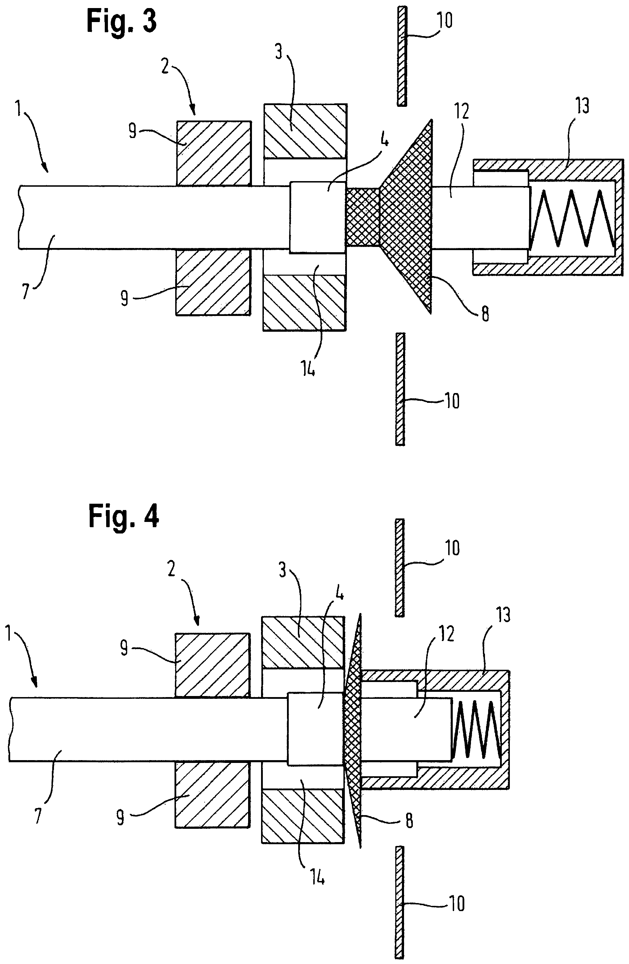

In diesen Spalt fährt dann ein Stülprohr 12 in axialer Richtung hinein, um den radial aufgeweiteten Teil des Außenleitergeflechts 8 umzubiegen, d.h. zunächst weiter radial aufzuweiten, wie dies in der Fig. 3 dargestellt ist. Die Zwickerelemente 10 sind dabei bereits wieder in Ihre Ausgangsstellung verfahren, um das Umbiegen des Außenleitergeflechts 8 nicht zu behindern. Das Stülprohr 12 ist axial verschiebbar und federbelastet in einer Führung eines (ersten) Schneidwerkzeugs 13 geführt. Die Bewegung des Stülprohrs 12 erfolgt indirekt durch ein Verfahren des ersten Schneidwerkzeugs 13.

Das Stülprohr 12 fährt so weit in das radial aufgeweitete Außenleitergeflecht 8 ein, bis dieses unter Zwischenschaltung des entsprechenden Abschnitts des Außenleitergeflechts 8 an der Stützhülse 4 anschlägt. Ein weiteres Verfahren des ersten Schneidwerkzeugs 13 führt dann zu einem Einfedern des Stülprohrs 12, d.h. dieses steht still während das erste Schneidwerkzeug 13 weiterbewegt wird (vgl. Fig. 4).

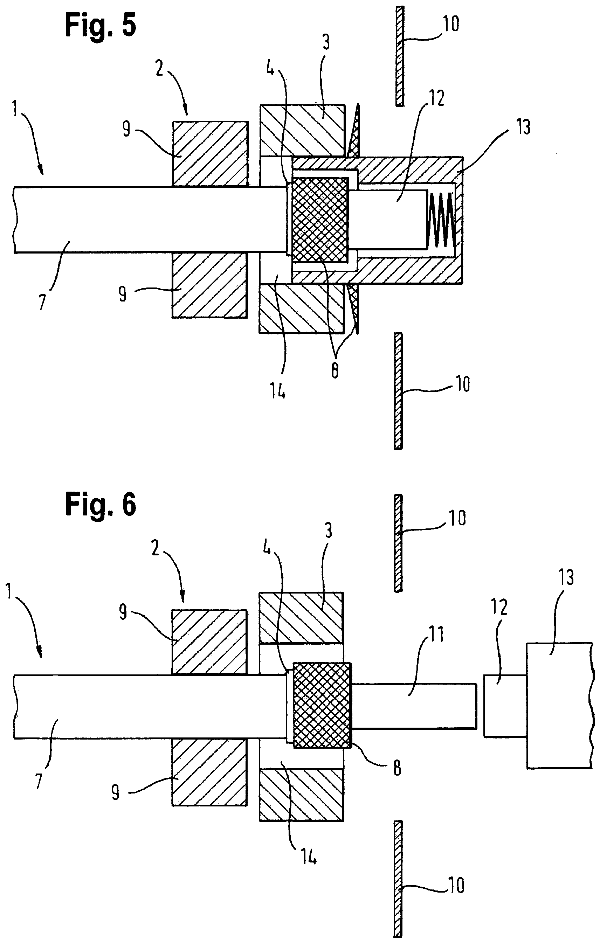

Das erste Schneidwerkzeug 13 taucht infolge der Weiterbewegung in eine Öffnung 14 des zweiten Schneidwerkzeugs 3 ein. Infolge der annähernd gleichen Durchmesser (Außendurchmesser des ersten Schneidwerkzeugs 13 und Innendurchmesser der Öffnung 14 des zweiten Schneidwerkzeugs 3) werden dadurch lokal erhebliche Scherkräfte auf einen Bereich des radial aufgeweiteten Außenleitergeflechts 8 ausgeübt, wodurch dieses in dem entsprechenden Bereich durchtrennt wird (vgl. Fig. 5).

Die Fig. 5 zeigt weiterhin, dass das erste Schneidwerkzeug 13 nach dem Durchtrennen des Außenleitergeflechts 8 noch weiter in die Öffnung 14 des zweiten Schneidwerkzeugs 3 eintaucht. Dabei überfährt die vordere Kante des teilweise rohrförmig ausgebildeten ersten Schneidwerkzeugs 13 die Stützhülse 4, was zu einem weiteren Umbiegen und im Ergebnis zu einem Umstülpen des verbliebenen freigelegten Außenleitergeflechts 8 führt. Dieser Abschnitt erstreckt sich somit entgegengesetzt zu seiner ursprünglichen Ausrichtung.

Das erste Schneidwerkzeug 13 einschließlich des Stülprohrs 12 wird daraufhin zurückgefahren (vgl. Fig. 6).

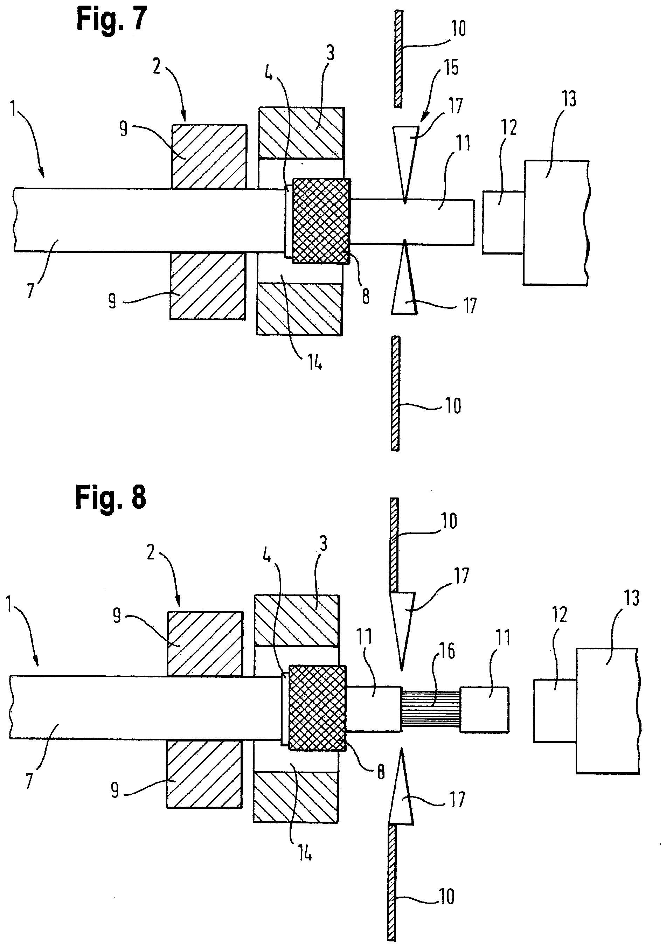

Mittels einer Trennvorrichtung 15 kann dann noch ein Abschnitt eines Innenleiters 16 des Koaxialkabels 1 freigelegt werden, indem mittels Schneidelementen 17 der Trennvorrichtung 15 ein umlaufender Schnitt in die Isolierschicht 11 eingebracht (vgl. Fig. 7) und die so vereinzelte Isolationsschichthülse von dem Innenleiter 16 in Richtung des freien Endes des Koaxialkabels 1 abgezogen wird (vgl. Fig. 8). Dies kann beispielsweise durch ein entsprechendes Verfahren der noch in die Isolationsschicht 11 eingreifenden Trennvorrichtung 15 oder, ebenfalls bei noch in die Isolationsschicht 11 eingreifender Trennvorrichtung 15, durch ein entgegengesetztes Verfahren des Koaxialkabels 1, beispielsweise mittels der Klemmvorrichtung 2, erfolgen. Auf dieselbe Weise kann auch ein Freilegen des Außenleitergeflechts 8 erfolgen, indem mittels der Trennvorrichtung 15 ein Abschnitt des Mantels 7 entfernt wird.

Das Koaxialkabel 1 kann dann entnommen und beispielsweise mit einem Koaxialsteckverbinder (nicht dargestellt) verbunden werden. Dazu kann beispielsweise ein Innenleiterteil des Koaxialsteckverbinders mit dem freigelegten Abschnitt des Innenleiters 16 verbunden (z.B. vercrimpt, verlötet, verschweißt, etc.) und ein Außenleiterteil mit dem umgestülpten Abschnitt des Außenleitergeflechts 8 verbunden (z.B. vercrimpt, verlötet, verschweißt, etc.) werden. Das Verbinden des bearbeiteten Endes des Koaxialkabels kann ebenfalls automatisiert erfolgen. Auch besteht die Möglichkeit, die erfindungsgemäße Vorrichtung so weiterzubilden, dass diese nach dem Bearbeiten des Kabelendes auch die Verbindung mit dem Koaxialsteckverbinder durchführt.

## Patentansprüche

1. Vorrichtung zum Bearbeiten eines Endes eines Kabels mit einem Innenteil und einer den Innenteil umgebenden Hülle, mit Mitteln zum radialen Aufweiten eines Abschnitts der Hülle und mit einer Schneidvorrichtung mit einem ersten Schneidkörper (13) und einem zweiten Schneidkörper (3), die in axialer Richtung bezüglich des Kabelendes zueinander verfahrbar sind und dadurch den radial aufgeweiteten Abschnitt der Hülle in einem Bereich durchtrennen, wobei der erste Schneidkörper (13) in eine Öffnung (14) des zweiten Schneidkörpers (3) eintaucht, wobei die Hülle durchtrennt wird, wobei die Vorrichtung ein Stülprohr (12) aufweist, das in den Spalt zwischen dem radial aufgeweiteten Abschnitt der Hülle und dem Innenteil axial hineinfahrbar ist, um den Abschnitt der Hülle umzubiegen, **dadurch gekennzeichnet, dass** das Stülprohr (12) federbelastet mit dem ersten Schneidkörper (13) verbunden ist und durch eine axiale Bewegung des ersten Schneidkörpers (13) in den Spalt hineingefahren wird, bis das Stülprohr (12) axial anschlägt, und eine weitergehende Bewegung des ersten Schneidkörpers (13) in einer Relativbewegung zu dem Stülprohr (12) erfolgt, wobei der erste Schneidkörper (13) rohrförmig ausgebildet ist und nach dem Durchtrennen den verbliebenen radial aufgeweiteten Abschnitt der Hülle durch ein Überfahren des sich an das zu bearbeitende Ende anschließenden Abschnitts des Kabels umstülpt.

2. Vorrichtung gemäß einem der vorhergehenden Ansprüche, **gekennzeichnet durch** eine den radial aufzuweitenden Abschnitt begrenzende, das Kabel umgebende Stützhülse (4).

3. Vorrichtung gemäß einem der vorhergehenden Ansprüche, **dadurch gekennzeichnet, dass** die Mittel zum radialen Aufweiten einen Zwicker (5) umfassen, der den radial aufzuweitenden Abschnitt der Hülle lokal in den Innenteil des Kabels drückt.

4. Vorrichtung gemäß einem der vorhergehenden Ansprüche, **gekennzeichnet durch** eine Trennvorrichtung (15) zum Durchtrennen einer äußeren Schicht des Innenteils und/oder einer äußeren Schicht des Außenteils des Kabels.

5. Verfahren zum automatisierten Bearbeiten eines Endes eines Kabels mit einem Innenteil und einer den Innenteil umgebenden Hülle mit einer Vorrichtung nach einem der Ansprüche 1 bis 4, wobei ein Abschnitt der Hülle radial aufgeweitet wird, **dadurch gekennzeichnet, dass** der radial aufgeweitete Abschnitt der Hülle durch das Ausüben einer axialen Schneidkraft in einem Bereich durchtrennt wird.

6. Verfahren gemäß Anspruch 5, **dadurch gekennzeichnet, dass** das radiale Aufweiten des Abschnitts durch das Ausüben radialer Kräfte in einem Teilbereich des Abschnitts erfolgt.

7. Verfahren gemäß Anspruch 5 oder 6, **dadurch gekennzeichnet, dass** der Abschnitt der Hülle durch Ausüben von axialen Kräften umgebogen wird.

8. Verfahren gemäß einem der Ansprüche 5 bis 7, **dadurch gekennzeichnet, dass** eine äußere Schicht der Hülle vor dem radialen Aufweiten einer inneren Schicht der Hülle in dem radial aufzuweitenden Abschnitt der Hülle entfernt wird.

9. Verfahren gemäß einem der Ansprüche 5 bis 8, **dadurch gekennzeichnet, dass** eine äußere Schicht des Innenteils nach einem radialen Aufweiten des Abschnitts der Hülle und dem dadurch erfolgenden Freilegen eines entsprechenden Abschnitts des Innenteils von einer inneren Schicht des Innenteils entfernt wird.

## Claims

1. Device for processing the end of a cable with an inner part and a sleeve surrounding the inner part, with means for radially widening a section of the sleeve and with a cutting device comprising a first cutting body (13) and a second cutting body (3) which can be moved towards one another in the axial direction with respect to the cable end, thus severing the radially widened section of the sleeve in one region, wherein the first cutting body (13) penetrates into an opening (14) of the second cutting body (3), cutting through the sleeve, wherein the device includes a foldback tube (12) which can be inserted axially into the gap between the radially widened section of the sleeve and the inner part in order to bend over said section of the sleeve, **characterised in that** the foldback tube (12) is connected, in a spring-loaded manner, with the first cutting body (13) and is inserted into the gap through an axial movement of the first cutting body (13) until the foldback tube (12) reaches an axial stop and a further movement of the first cutting body (13) takes place in a movement relative to the foldback tube (12)wherein the first cutting body (13) is tubular in form and, following the severing action, folds back the remaining radially widened section of the sleeve by sliding over the section of the cable adjacent the end which is to be processed.

2. Device according to one of the preceding claims, **characterised by** a supporting sleeve (4) surrounding the cable and limiting the section which is to be radially widened.

3. Device according to one of the preceding claims, **characterised in that** the means for radial widening comprise a nipper (5) which presses the section of the sleeve which is to be radially widened locally into the inner part of the cable.

4. Device according to one of the preceding claims, **characterised by** a severing device (15) for severing an outer layer of the inner part and/or an outer layer of the outer part of the cable.

5. Method for the automated processing of an end of a cable with an inner part and a sleeve surrounding the inner part with an device according to one of claims 1 to 4, wherein one section of the sleeve is radially widened, **characterised in that** the radially widened section of the sleeve is severed in one region through the application of an axial cutting force.

6. Method according to claim 5, **characterised in that** the radial widening of said section is effected through the application of radial forces in a partial region of said section.

7. Method according to claim 5 or 6, **characterised in that** said section of the sleeve is bent over through the application of axial forces.

8. Method according to one of the claims 5 to 7, **characterised in that** an outer layer of the sleeve is removed prior to the radial widening of an inner layer of the sleeve in the section of the sleeve which is to be radially widened.

9. Method according to one of the claims 5 to 8, **characterised in that** an outer layer of the inner part is removed from an inner layer of the inner part following a radial widening of the section of the sleeve and the resulting exposure of a corresponding section of the inner part.

## Revendications

1. Dispositif de traitement d'une extrémité d'un câble pourvu d'une partie intérieure et d'une gaine entourant la partie intérieure, comportant des moyens d'évasement radial d'une portion de la gaine et un moyen de coupe pourvu d'un premier corps de coupe (13) et d'un second corps de coupe (3) qui sont déplaçables l'un par rapport à l'autre en direction axiale par rapport à l'extrémité du câble et qui coupent ainsi la portion de la gaine évasée radialement dans une zone, le premier corps de coupe (13) plongeant dans une ouverture (14) du second corps de coupe (3) en coupant la gaine, le dispositif comportant un tube de retroussement (12) apte à s'introduire axialement dans l'intervalle entre la portion de la gaine évasée radialement et la partie intérieure, afin de rabattre la portion de la gaine, **caractérisé en ce que** le tube de retroussement (12) est relié au premier corps de coupe (13) en étant sollicité élastiquement et est introduit dans l'intervalle par un mouvement axial du premier corps de coupe (13) jusqu'à ce que le tube de retroussement (12) vienne axialement en butée, et une poursuite du mouvement du premier corps de coupe (13) s'effectue par un mouvement relatif par rapport au tube de retroussement (12), et le premier corps de coupe (13) est réalisé en forme tubulaire et après la coupe il vient retrousser la portion évasée radialement restant de la gaine en passant par-dessus la portion du câble qui se raccorde à l'extrémité à traiter.

2. Dispositif selon la revendication précédente, **caractérisé par** une douille de protection (4) qui entoure le câble et délimite la portion à évaser radialement.

3. Dispositif selon l'une des revendications précédentes, **caractérisé en ce que** les moyens d'évasement radial comprennent un élément formant pince (5) qui pousse la portion à évaser radialement de la gaine localement jusque dans la partie intérieure du câble.

4. Dispositif selon l'une des revendications précédentes, **caractérisé par** un dispositif de séparation (15) pour couper une couche extérieure de la partie intérieure et/ou une couche extérieure de la partie extérieure du câble.

5. Procédé de traitement automatique d'une extrémité d'un câble, pourvu d'une partie intérieure et d'une gaine entourant la partie intérieure, au moyen d'un dispositif selon l'une des revendications 1 à 4, dans lequel on fait évaser radialement une portion de la gaine, **caractérisé en ce que** l'on coupe la portion évasée radialement de la gaine en exerçant une force de coupe axiale dans une zone.

6. Procédé selon la revendication 5, **caractérisé en ce que** l'on réalise l'évasement radial de la portion en exerçant des forces radiales dans une zone partielle de la portion.

7. Procédé selon la revendication 5 ou 6, **caractérisé en ce que** l'on rabat la portion de la gaine en exerçant des forces axiales.

8. Procédé selon l'une des revendications 5 à 7, **caractérisé en ce qu'**avant l'évasement radial d'une couche intérieure de la gaine, on enlève une couche extérieure de la gaine dans la portion à évaser radialement de la gaine.

9. Procédé selon l'une des revendications 5 à 8, **caractérisé en ce qu'**après un évasement radial de la portion de la gaine et la mise à découvert qui en résulte d'une portion correspondante de la partie intérieure, on enlève une couche extérieure de la partie intérieure vis-à-vis d'une couche intérieure de la partie intérieure.
